# EUROPEAN PATENT APPLICATION

(11) **EP 4 307 205 A1**
(43) Date of publication of application: **17.01.2024**
(21) Application number: 22864965.3
(22) Date of filing: 26.08.2022
(51) Int. Cl.: G06Q 50/06, G06Q 50/10, H04L 12/46, H04L 9/40, H04L 67/02, H04L 67/62

(54) **SYSTEM FOR MANAGING BATTERY DATA, AND METHOD THEREFOR**

(30) Priority: 02.09.2021 KR 20210117118
(71) Applicant: LG Energy Solution, Ltd., Seoul 07335 (KR)
(72) Inventor: JO, Young Chang, Daejeon 34122 (KR); JEON, Jae Kwang, Daejeon 34122 (KR); LEE, Jeong Bin, Daejeon 34122 (KR); KIM, Won Kyung, Daejeon 34122 (KR)
(74) Representative: Plasseraud IP
(86) International application number: PCT/KR2022/012799
(87) International publication number: WO 2023/033463

(57) **Abstract**

A battery data management system according to an embodiment disclosed herein includes a communication device configured to obtain state data of a battery from a battery management system and transmit the state data of the battery to an outside, a virtual private network (VPN) server configured to receive the state data of the battery from the communication device through a first network and transmit the state data of the battery to the outside through a second network, a cloud server configured to receive the state data of the battery from the VPN server through the second network and transmit the state data of the battery to the outside through a third network, and a management server configured to manage the state data of the battery, received from the cloud server through the third network.

## Description

### [TECHNICAL FIELD]

### CROSS-REFERENCE TO RELATED APPLICATION

This application claims priority to and the benefit of Korean Patent Application No. 10-2021-0117118 filed in the Korean Intellectual Property Office on September 2, 2021, the entire contents of which are incorporated herein by reference.

### TECHNICAL FIELD

Embodiments disclosed herein relate to a battery data management system and a method therefor.

### [BACKGROUND ART]

Secondary batteries are generally used as battery racks including a battery module where a plurality of battery cells are connected to one another in series and/or in parallel. The battery rack may be managed and controlled by a battery management system in terms of a state and an operation. An energy storage system (ESS) including such a battery rack obtains key data through a battery management system (BMS) and a sensor, and stores log data indicating a state of a battery in a personal computer (PC)-based battery management system. The PC-based battery management system is an essential device provided on the site including the battery rack to control and protect the battery rack, and is not generally connected to a network for information security because high stability is required.

Thus, to check the state of the battery provided on the ESS site that is a space where the ESS is installed and to analyze a cause of a failure in the event of the failure, a manager needs to directly visit the site to perform the check and manually back up data, and additional management cost may incur. In the event of an emergency situation such as a fire on the ESS site, when the PC-based battery management system is damaged by the fire, it may be difficult to analyze a cause of an accident due to a data loss.

### [DISCLOSURE]

### [TECHNICAL PROBLEM]

Embodiments disclosed herein provide a battery data management system and method, in which various pieces of data may be automatically collected through a network and operation information of a battery installed in a private network may be collectively and efficiently managed.

Embodiments disclosed herein also provide a battery data management system and method, in which data of a battery may be safely stored without a loss and a manager does not need to directly visit the site to maintain and repair the battery, thereby reducing battery management cost.

Embodiments disclosed herein further provides a battery data management system and system having enhanced security using a VPN.

Technical problems of the embodiments disclosed herein are not limited to the above-described technical problems, and other unmentioned technical problems would be clearly understood by one of ordinary skill in the art from the following description.

### [TECHNICAL SOLUTION]

A battery data management system according to an embodiment disclosed herein includes a communication device configured to obtain state data of a battery from a battery management system and transmit the state data of the battery to an outside, a virtual private network (VPN) server configured to receive the state data of the battery from the communication device through a first network and transmit the state data of the battery to the outside through a second network, a cloud server configured to receive the state data of the battery from the VPN server through the second network and transmit the state data of the battery to the outside through a third network, and a management server configured to manage the state data of the battery, received from the cloud server through the third network.

In an embodiment, the communication device may include a VPN client for creating an encrypted tunnel with the VPN server.

In an embodiment, the VPN server may be further configured to receive the state data of the battery through an encrypted tunnel created by the VPN client and transmit the state data of the battery to the cloud server.

In an embodiment, the first network and the third network may include a private network, and the second network may include a public network.

In an embodiment, the first network may include a virtual private network.

In an embodiment, the communication device may be further configured to select, as first data, data about diagnosis information indicating a failure of the battery out of the state data of the battery, received from the battery management system, and transmit the first data to the outside in a preset first period.

In an embodiment, the first data may include a diagnosis value calculated in the battery management system to diagnose the failure of the battery.

In an embodiment, the communication device may be further configured to transmit second data, which is state data of the battery collected for a specific time from the battery management system, to the outside in a preset second period.

In an embodiment, the management server may include a big data server configured to store the state data of the battery, and the big data server may be further configured to store the second data.

In an embodiment, the management server may include a web server configured to display state information of the battery to a user.

In an embodiment, the management server may include an ETL server configured to extract the state data of the battery and transform the state data into an analyzable form.

In an embodiment, the communication device may be provided in plural.

A battery data management method according to an embodiment disclosed herein includes obtaining, by a communication device, state data of a battery from a battery management system and transmit the state data of the battery to an outside, receiving, by a virtual private network (VPN) server, the state data of the battery from the communication device through a first network and transmitting the state data of the battery to the outside through a second network, receiving, by a cloud server, the state data of the battery from the VPN server through the second network and transmitting the state data of the battery to the outside through a third network, and managing, by a management server, the state data of the battery, received from the cloud server through the third network.

In an embodiment, the battery data management method may further include selecting, by the communication device, as first data, data about diagnosis information indicating a failure of the battery out of the state data of the battery, received from the battery management system and transmitting, by the communication device, the first state data to an outside in a preset first period.

In an embodiment, the battery data management method may further include transmitting, by the communication device, second data, which is state data of the battery collected for a specific time from the battery management system, to an outside in a preset second period.

In an embodiment, the he battery data management method may further include creating, by the communication device, an encrypted tunnel with the VPN server.

### [ADVANTAGEOUS EFFECTS]

The battery data management system and method according to an embodiment disclosed herein may automatically collect various data of the battery through a network, and integrally and efficiently operation information of a battery installed in a private network.

In the battery data management system and method according to an embodiment disclosed herein, a local cloud server collects various pieces of data of the battery with respect to a location and an integration cloud server manages the whole data, thereby preventing a speed delay caused by a physical distance.

The battery data management system and method according to an embodiment disclosed herein may compensate for the vulnerability to network attacks targeting security vulnerabilities when various pieces of data of the battery are transmitted through a public network.

The battery data management system and method according to an embodiment disclosed herein may prevent the risk of accesses to PCs of an ESS site by hackers.

The battery data management system and method according to an embodiment disclosed herein may enhance security by transmitting data based on an encrypted tunnel created through a virtual private network (VPN) client.

Moreover, various effects recognized directly or indirectly from the disclosure may be provided.

### [DESCRIPTION OF DRAWINGS]

FIG. 1 is a diagram showing a battery data management system according to an embodiment disclosed herein.
FIG. 2 shows in detail a battery data management system, according to an embodiment disclosed herein.
FIG. 3 shows operations of a system for managing battery data, according to an embodiment disclosed herein.
FIG. 4 shows a battery data management system, according to another embodiment disclosed herein.
FIG. 5 is a flowchart showing a battery data management method according to an embodiment disclosed herein.
FIGS. 6 and 7 are flowcharts showing in detail a battery data management method according to an embodiment disclosed herein.
FIG. 8 is a block diagram showing a hardware configuration of a computing system for performing a battery data management method, according to an embodiment disclosed herein.

### [MODE FOR INVENTION]

Hereinafter, embodiments disclosed in this document will be described in detail with reference to the exemplary drawings. In adding reference numerals to components of each drawing, it should be noted that the same components are given the same reference numerals even though they are indicated in different drawings. In addition, in describing the embodiments disclosed in this document, when it is determined that a detailed description of a related known configuration or function interferes with the understanding of an embodiment disclosed in this document, the detailed description thereof will be omitted.

To describe a component of an embodiment disclosed herein, terms such as first, second, A, B, (a), (b), etc., may be used. These terms are used merely for distinguishing one component from another component and do not limit the component to the essence, sequence, order, etc., of the component. The terms used herein, including technical and scientific terms, have the same meanings as terms that are generally understood by those skilled in the art, as long as the terms are not differently defined. Generally, the terms defined in a generally used dictionary should be interpreted as having the same meanings as the contextual meanings of the relevant technology and should not be interpreted as having ideal or exaggerated meanings unless they are clearly defined in the present application.

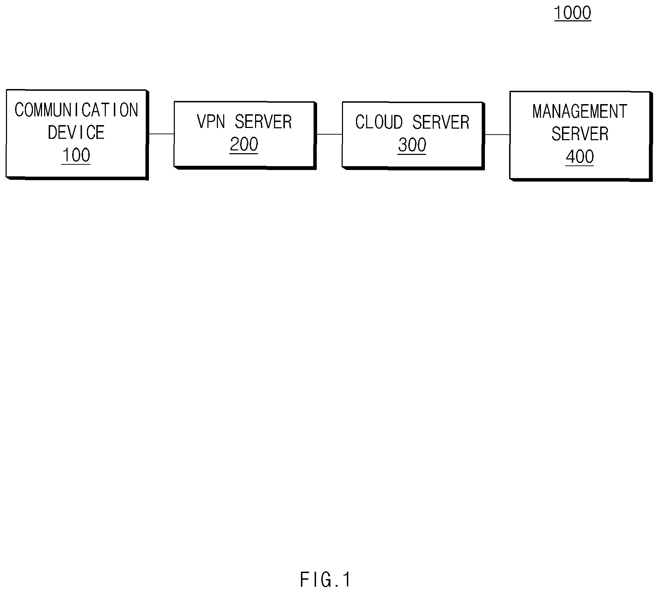

FIG. 1 is a diagram showing a battery data management system according to an embodiment disclosed herein.

Referring to FIG. 1, a battery data management system 1000 according to an embodiment disclosed herein may include a communication device 100, a VPN server 200, a cloud server 300, and a management server 400.

The communication device 100 may obtain state data of the battery from the battery management system. For example, each of at least one communication device 100 may be connected to a battery rack and obtain the state data of the battery from the battery management system of the connected battery rack. In an embodiment, the communication device 100 may be included in the battery rack.

The communication device 100 may transmit the state data of the battery to outside. For example, the communication device 100 may transmit the obtained state data of the battery to the VPN server 200. In an embodiment, the communication device 100 may include a VPN client for creating an encrypted tunnel with the VPN server 200. For example, the communication device 100 may execute the VPN client to create the encrypted tunnel with the VPN server 200 and transmit the state data of the battery through the created tunnel.

The VPN server 200 may receive the state data of the battery from the communication device 100 through a first network. The VPN server 200 may transmit the received state data of the battery to outside. In an embodiment, the VPN server 200 may receive and store the state data of the battery from the communication device 100 for a preset time, and transmit the stored data to the cloud server 300. In an embodiment, the first network may be a private network. For example, the first network may be a virtual private network. Thus, the VPN server 200 may receive the state data of the battery from the communication device 100 while maintaining security.

The cloud server 300 may receive the state data of the battery through a second network from the VPN server 200. The cloud server 300 may transmit the received state data of the battery to outside. For example, the cloud server 300 may receive the state data of the battery from the VPN server 200 and transmit the received state data of the battery to the management server 400. In an embodiment, the second network may be a public network.

The management server 400 may receive the state data of the battery through a third network from the cloud server 300. The management server 400 may manage the received state data of the battery. For example, the management server 400 may collect the received state data of the battery and process and manage the collected data. In an embodiment, the third network may be a private network.

The battery data management system 1000 according to an embodiment disclosed herein may receive state data of a battery obtained from a battery rack from the management server 400 through the at least one communication device 100, the VPN server 200, and the cloud server 300 and manage the same, thereby storing the state data of the battery for a long time, immediately recognizing occurrence of a failure, and preventing speed delay and data loss according to a physical position of a server.

The battery data management system 1000 according to an embodiment disclosed herein may automatically collect various data of the battery through a network, and integrally and efficiently operation information of a battery installed in a private network.

The battery data management system 1000 according to an embodiment disclosed herein may safely store data of a battery without a loss, and a manager does not need to directly visit the site to maintain and repair the battery, thereby reducing battery management cost.

The battery data management system 1000 according to an embodiment disclosed herein may generate an encrypted tunnel between the communication device 100 and the VPN server 200 to transmit data based on the generated tunnel, thereby compensating for security vulnerabilities of the public network.

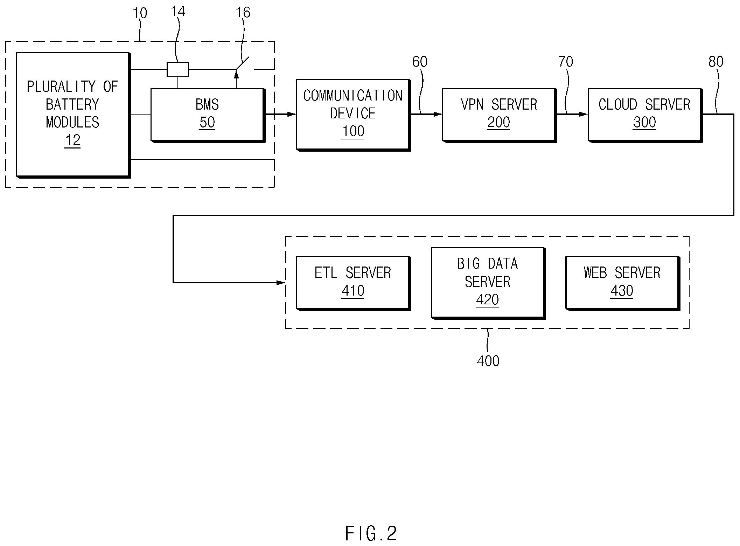

FIG. 2 shows in detail a battery data management system, according to an embodiment disclosed herein. In an embodiment, the communication device 100, the VPN server 200, the cloud server 300, and the management server 400 of FIG. 2 may be substantially the same as the communication device 100, the VPN server 200, the cloud server 300, and the management server 400 of FIG. 1, respectively.

Referring to FIG. 2, the battery rack 10 may include a plurality of battery modules 12, a sensor 14, a switching unit 16, and a battery management system 50. The battery rack 10 may include the battery module 12, the sensor 14, the switching unit 16, and the battery management system 50 provided in plural.

The plurality of battery modules 12 may include one or more chargeable/dischargeable battery cells. In this case, the plurality of battery modules 12 may be connected in series or in parallel.

The sensor 14 may detect current flowing in the battery rack 10. In this case, a detected signal of current may be transmitted to the battery management system 50.

The switching unit 16 may be connected in series to a (+) terminal side or a (-) terminal side of the battery module 12 to control the charging/discharging current flow of the battery module 12. For example, the switching unit 16 may use at least one relay, a magnetic contactor, etc., according to the specifications of the battery rack 10.

The battery management system 50 may monitor the voltage, current, temperature, etc., of the battery rack 10 to perform control and management to prevent overcharging and overdischarging, etc., and may include, for example, an RBMS.

The battery management system 50, which is an interface for receiving measurement values of the above-described various parameter values, may include a plurality of terminals and a circuit, etc., connected thereto to process input values. The battery management system 50 may control on/off of the switching unit 16, e.g., a relay, a contactor, etc., and may be connected to the battery module 12 to monitor the state of each battery module 12.

Meanwhile, the battery management system 50 disclosed herein may collect state data, such as voltage, current, temperature, etc., of the battery module 12 and transmit such data to an external server through a communication device 100. In particular, the communication device 100 connected with the battery management system 50 may collect entire state data stored in the battery management system 50 in a specific time unit (e.g., daily) and transmit the state data to the management server 400 through the VPN server 200 and the cloud server 300.

The communication device 100 may be connected to the battery management system 50 provided in the battery rack 10 to receive various data about the state of the battery from the battery management system 50. In an embodiment, the battery rack 10 and the communication device 100 may be provided on a communication network of an ESS installation site.

The communication device 100 may obtain the state data of the battery from the battery management system 50 and transmit the state data to an outside.. In this case, the communication device 100 may include an Internet of Things (IoT) communication device connected to the battery management system 50 included in the battery rack 10. That is, the communication device 100 may connect to an external Internet network and perform a network function, in place of the battery management system 50 not connected to a network for security.

The communication device 100 may select, as first data, main data about diagnosis information indicating whether a failure occurs in the battery, out of the state data of the battery received from the battery management system 50, and transmit the first data to an outside in a preset period (a first period) (e.g., a unit of one minute to several minutes). For example, the first data may include data calculated by the battery management system 50 to diagnose a failure of the battery, such as diagnosis values like maximum and minimum voltages for each battery cell, an average voltage of battery cells, a state of charge (SOC), a state of health (SOH), etc. In an embodiment, the communication device 100 may directly transmit the first data to the web server 430 via an ETL server 410 of the management server 400, through the VPN server 200 and the cloud server 300.

The communication device 100 may transmit second data that is state data of the entire battery included in the battery rack 10, collected for a certain period (e.g., one day) from the battery management system 50, to an outside in a preset period (a second period) (e.g., daily). For example, the second data may include state information (voltage, current, internal temperature, etc.) of the entire battery and sensing information (outside temperature, humidity, etc.) about an environment in the vicinity of the battery, which are collected for a certain time. In an embodiment, the communication device 100 may directly transmit the second data to the web server 430 via the ETL server 410 and a big data server 420 of the management server 400, through the VPN server 200 and the cloud server 300.

The communication device 100 may include a VPN client for creating an encrypted tunnel with the VPN server 200. For example, after creating the encrypted tunnel with the VPN server 200, the communication device 100 may transmit the state data of the battery to the VPN server 200 through the created tunnel. In another example, the communication device 100 may not be able to transmit data to the VPN server 200, when failing in tunnel creation. In another example, the communication device 100 may not be able to transmit data to the VPN server 200, before the tunnel with the VPN server 200 is created or when the tunnel is not created.

The VPN server 200 may receive the state data of the battery from the communication device 100. For example, the VPN server 200 may receive the state data of the battery through a first network 60. The VPN server 200 may receive the state data of the battery from the communication device 100 and transmit the received state data of the battery to the cloud server 300. For example, the VPN server 200 may transmit the state data of the battery to the cloud server 300 through a second network 70 different from the first network 60. In an embodiment, the first network 60 may be a private network. For example, the first network 60 may be a virtual private network. That is, a network through which the communication device 100 transmits data to the VPN server 200 may be a virtual private network, and security against an external attack may be enhanced.

The cloud server 300 may transmit the state data of the battery received from the VPN server 200 to the management server 400. For example, the cloud server 300 may transmit the state data of the battery to the management server 400 through a third network 80 different from the first network 60 and the second network 70. The cloud server 300 may temporarily store the received state data of the battery and transmit the state data of the battery to the management server 400.

The cloud server 300 may serve as a buffer between an ESS site including the battery rack 10 and the management server 400. That is, the cloud server 300 may secure stability for data transmission by preventing speed delay or data loss depending on a physical position of the management server 400 provided on a private network. For example, the cloud server 300 may prevent a communication delay between the big data server 420 located in Korea and an ESS site located in the US.

The management server 400 may manage the received state data of the battery through the VPN server 200 and the cloud server 300. For example, the management server 400 may integrally operate and manage the battery of the entire ESS site and immediately recognize the failure of the battery or detect the failure of the battery in advance through big data analysis.

The ETL server 410 may extract the state data of the battery, received from the battery management system 50 through the communication device 100, the VPN server 200, and the cloud server 300, and transform the state data into an analyzable form. For example, the ETL server 410 may transform data into a form analyzable in the big data server 420 or a terminal of a user, etc., by performing pre-processing through time reversal removal, redundant data removal, time unit setting, file format conversion, etc.

The big data server 420 may collect the state data of the battery transformed by the ETL server 410 and store the state data for a long term. For example, the big data server 420 may compress and entire data (e.g., the second data) collected for a specific time out of the state data of the battery to collectively manage data in one spot regardless of an ESS installation site. The big data server 420 may perform big data modeling analysis based on the state data of the battery, thereby diagnosing a failure of the battery in advance.

The web server 430 may display the state information of the battery to the user. That is, the web server 430 may display real-time state information and occurrence of a failure, received in the unit of several minutes through the communication device 100, through a user interface (UI). The web server 430 may display a result of analyzing, by the big data server 420, the entire state data of the battery received in the unit of one day or several days through the communication device 100.

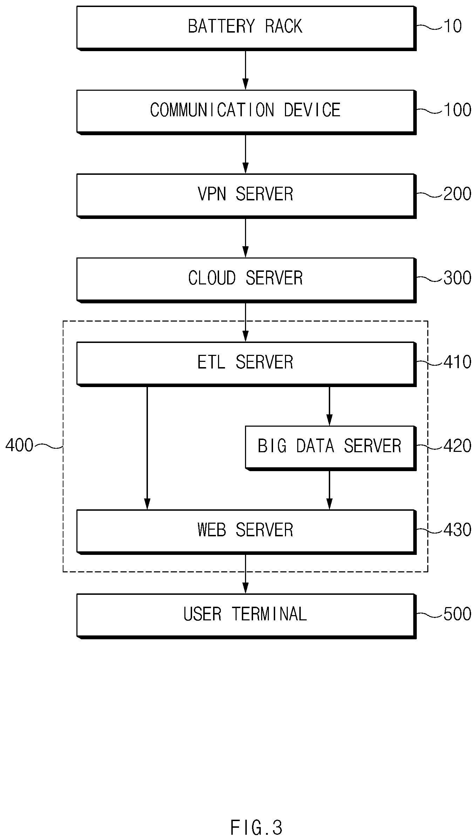

FIG. 3 shows operations of a system for managing battery data, according to an embodiment disclosed herein.

Referring to FIG. 3, the battery management system provided on an ESS site installed in each area may receive state information such as voltages, currents, temperatures, etc., of battery cells included in the battery rack 10, and sensing information such as an outside temperature, humidity, etc., from a sensor provided in the battery rack 10. The battery management system may calculate diagnosis values such as maximum/minimum/average voltages, SOC, SOH, etc., of the battery cell, based on the state information and the sensing information.

The communication device 100 connected to the battery management system may receive the state data (i.e., the state information, the sensing information, the diagnosis values, etc.) of the battery collected in the battery management system. The communication device 100 may be configured to transmit the received state data to an external server by being connected to the network.

In this case, to monitor a failure of the battery in real time, the communication device 100 may collect a diagnosis value (the first data) of the battery in the unit of one minute or several minutes and temporarily store the diagnosis value in the cloud server 300 to monitor a failure of the battery in real time through the at least one VPN server 200, may pre-process the diagnosis value, transmitted from the cloud server 300, in the ETL server 410, and then transmit the pre-processed diagnosis value to the web server 430. Thus, the web server 430 may perform display to allow the user to check abnormality of the battery of the ESS site in real time. In an embodiment, the cloud server 300 may transmit the first data immediately to the management server 400 without storing the first data.

The communication device 100 may collect the state information and the sensing information (the second data) of the entire battery in the unit of one minute or several minutes to transmit the state information and the sensing information through the at least one VPN server 200 and the cloud server 300, may pre-process the state information and the sensing information in the ETL server 410, and then transmit the state information and the sensing information to the bit data server 420. The big data server 420 may compress and store the state information and the sensing information of the battery to store them for a long term. The big data server 420 may perform big data modeling analysis based on such data, thereby allowing the user to predict a failure of the battery. The state data, big data analysis result information, etc., stored in the big data server 420 may be transmitted to the web server 430 so as to be checked by the user.

The user may download various data such as state data, failure diagnosis information, big data analysis result information, etc., of the battery from the web server 430 through a terminal (e.g., a PC, a tablet, a cellular phone, etc.) 500. Thus, the user may check the analysis result information of the management server 400 through the terminal 500 of the user or may directly analyze the state data of the battery through a program, etc., provided in the terminal 500 of the user.

Moreover, it is described in FIG. 3 that data obtained in the communication device 100 is transmitted through the at least one VPN server 200 and the cloud server 300, is directly transmitted to the web server 430 through the ETL server 410 (the first data) or is transmitted to the web server 430 after being stored in the big data server 420 (the second data), but some of the ETL server 410, the big data server 420, and the web server 430 of the management server 400 may be omitted as needed.

As such, the battery data management system 1000 according to an embodiment disclosed herein may collect data about the state of the battery from each ESS site and store the data for a long term without a need for the manager to directly visit the site, and perform analysis based on the collected data, thereby detecting and predicting a failure of the battery.

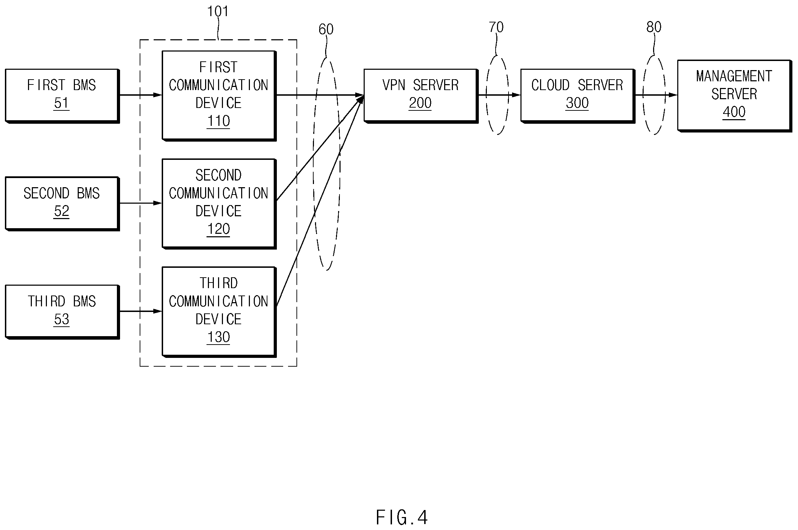

FIG. 4 shows a battery data management system, according to another embodiment disclosed herein.

Referring to FIG. 4, each of BMSs 51, 52, and 53 may be substantially the same as the BMS 50 of FIG. 2, respective communication devices 110, 120, and 130 included in the plurality of communication devices 101 may be substantially the same as the communication device 100 of FIG. 1, the VPN server 200 may be substantially the same as the VPN server 200 of FIG. 1, the cloud server 300 may be substantially the same as the cloud server 300 of FIG. 1, and the management server 400 may be substantially the same as the management server 400 of FIG. 1.

A plurality of communication devices 101 may communicate with a plurality of BMSs. For example, the first communication device 110 may communicate with the first BMS 51 included in the first battery rack (not shown), the second communication device 120 may communicate with the second BMS 52 included in a second battery rack (not shown), and the third communication device 130 may communicate with the third BMS 53 included in a third battery rack (not shown).

The plurality of communication devices 101 may obtain the state data of the battery from the plurality of BMSs 51, 52, and 53 connected (communicating) therewith, respectively, and transmit the obtained state data of the battery to the outside. For example, each of the plurality of communication devices 101 may transmit the state data of the battery to the VPN server 200 through the first network 60. In an embodiment, the first network 60 may be a private network. For example, the first network 60 may be a virtual private network.

In an embodiment, each of the plurality of communication devices 101 may include a VPN client and create an encrypted tunnel with the VPN server 200 through the VPN client. For example, each of the plurality of communication devices 101 may create the encrypted tunnel with the VPN server 200 and transmit the state data of the battery to the VPN server 200 through the created tunnel. Thus, the plurality of communication devices 101 may prevent data theft from the outside.

The VPN server 200 may transmit the received state data of the battery to the cloud server 300 through the created tunnel. For example, the VPN server 200 may transmit the state data of the battery to the cloud server 300 through the second network 70. In an embodiment, the second network 70 may be a public network.

The cloud server 300 may transmit the received state data of the battery to the management server 400. For example, the cloud server 300 may transmit the received state data of the battery to the management server 400 through the third network 80. In an embodiment, the third network 80 may be a private network.

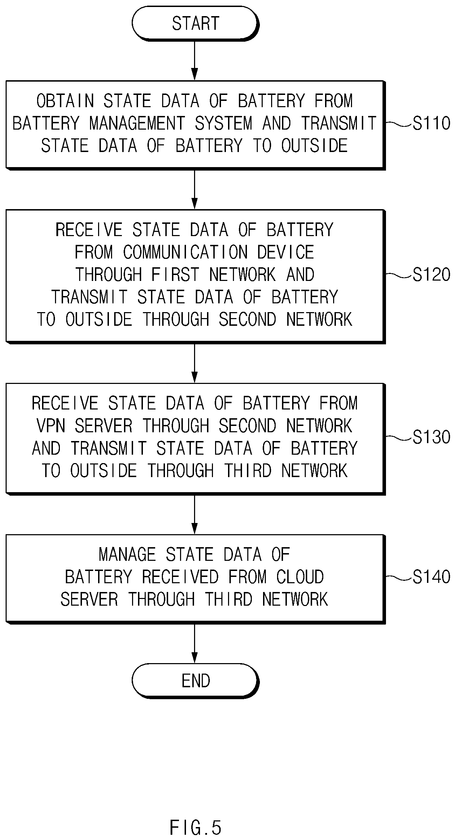

FIG. 5 is a flowchart showing a battery data management method according to an embodiment disclosed herein.

Referring to FIG. 5, a battery data management method according to an embodiment disclosed herein may include operation S 110 of obtaining state data of a battery from a battery management system and transmitting the state data of the battery to an outside, operation S 120 of receiving the state data of the battery from a communication device through a first network and transmitting the state data of the battery to the outside through a second network, operation S130 of receiving the state data of the battery from a VPN server through the second network and transmitting the state data of the battery to the outside through a third network, and operation S140 of managing the state data of the battery received from a cloud server through the third network.

In operation S 110 of obtaining the state data of the battery from the battery management system and transmitting the state data of the battery to the outside, the communication device 100 may obtain the state data of the battery from the battery management system and transmit the obtained state data of the battery to the VPN server 200. In another example, the communication device 100 may transmit the state data of the battery to the VPN server 200 through the first network. In an embodiment, the first network may be a private network.

In operation S120 of receiving the state data of the battery from the communication device through the first network and transmitting the state data of the battery to the outside through the second network, the VPN server 200 may receive the state data of the battery from the communication device 100 through the first network and transmit the received state data of the battery to the cloud server 300 through the second network. In an embodiment, the second network may be a public network.

In operation S130 of receiving the state data of the battery from the VPN server through the second network and transmitting the state data of the battery to the outside through the third network, the cloud server 300 may receive the state data of the battery from the VPN server 200 through the second network and transmit the received state data of the battery to the management server 400 through the third network. In an embodiment, the third network may be a private network.

In operation S140 of managing the state data of the battery, received from the cloud server through the third network, the management server 400 may receive the state data of the battery from the cloud server 300 through the third network and manage the received state data of the battery. For example, the ETL server 410 included in the management server 400 may extract the state data of the battery and transform the state data into an analyzable form. The big data server 420 included in the management server 400 may collect the state data of the battery transformed by the ETL server 410 and store the state data for a long term. The web server 430 included in the management server 400 may display state information of the battery to a user.

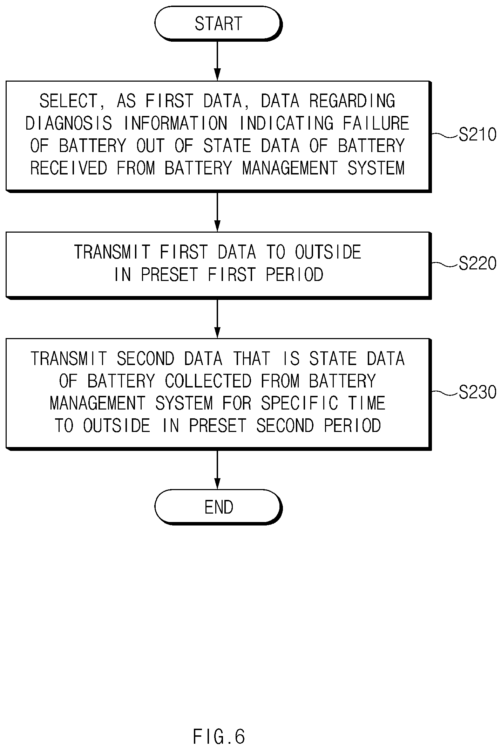

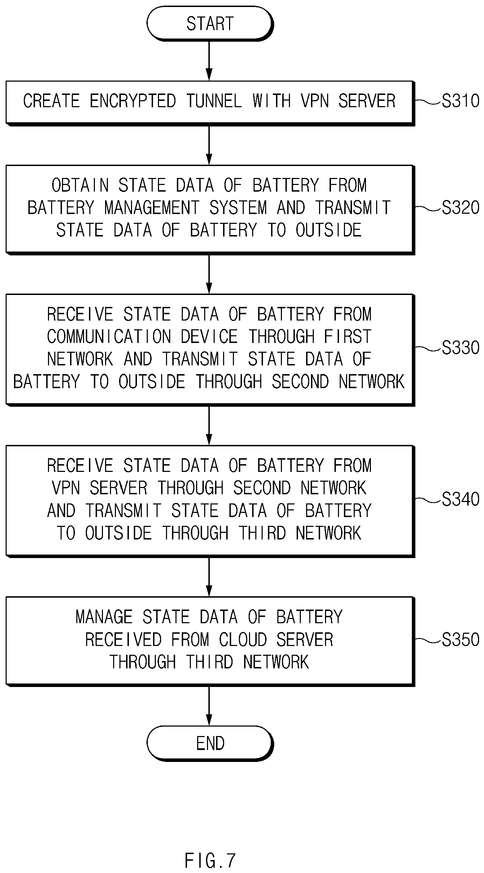

FIGS. 6 and 7 are flowcharts showing in detail a battery data management method according to an embodiment disclosed herein.

Referring to FIG. 6, a battery data management method according to an embodiment disclosed herein may further include operation S210 of selecting, as first data, data regarding diagnosis information indicating a failure of a battery out of state data of the battery, received from a battery management system, operation S220 of transmitting the first data to an outside in a preset first period, and operation S230 of transmitting second data, which is the state data of the battery collected from the battery management system for a specific time, to the outside in a preset second period.

In operation S210 of selecting, as the first data, the data regarding the diagnosis information indicating a failure of the battery out of the state data of the battery received from the battery management system, the communication device 100 may select, as the first data, main data regarding the diagnosis information indicating a failure of the battery out of the state data of the battery received from the battery management system. For example, the first data may include data calculated by the battery management system to diagnose a failure of the battery, such as diagnosis values like maximum and minimum voltages for each battery cell, an average voltage of battery cells, an SOC, an SOH, etc.

In operation S220 of transmitting the first data to the outside in the preset first period, the communication device 100 may transmit the first data to the outside in the preset first period. For example, the communication device 100 may directly transmit the first data to the web server 430 via the ETL server 410 of the management server 400, through the VPN server 200 and the cloud server 300.

In operation S230 of transmitting the second data, which is the state data of the battery collected from the battery management system for a specific time, to the outside in the preset second period, the communication device 100 may transmit second data that is state data of the entire battery included in the battery rack 10, collected for a certain period (e.g., one day) from the battery management system, to an outside in a preset period (the second period) (e.g., daily). For example, the second data may include state information (voltage, current, internal temperature, etc.) of the entire battery and sensing information (outside temperature, humidity, etc.) about an environment in the vicinity of the battery, which are collected for a certain time. In an embodiment, the communication device 100 may directly transmit the second data to the web server 430 via the ETL server 410 and a big data server 420 of the management server 400, through the VPN server 200 and the cloud server 300.

In an embodiment, when operation S210 is performed, operation S220 may be performed together. In another embodiment, any one of operations S210 and S230 may be omitted.

Referring to FIG. 7, a battery data management method according to an embodiment disclosed herein may include operation S310 of creating an encrypted tunnel with a VPN server, operation S320 of obtaining state data of a battery from a battery management system and transmitting the state data of the battery to an outside, operation S330 of receiving the state data of the battery from a communication device through a first network and transmitting the state data of the battery to the outside through a second network, operation S340 of receiving the state data of the battery from a VPN server through the second network and transmitting the state data of the battery to the outside through a third network, and operation S350 of managing the state data of the battery received from a cloud server through the third network. In an embodiment, operations S320 to S350 may be substantially the same as operations S110 to S140 of FIG. 5, respectively. That is, the battery data management method according to an embodiment may further include operation S310 in addition to the operations shown in FIG. 5.

In operation S310 of creating the encrypted tunnel with the VPN server, the communication device 100 may create the encrypted tunnel with the VPN server 200. For example, the communication device 100 may include a VPN client and create an encrypted tunnel with the VPN server 200 through (execution by) the VPN client. When the encrypted tunnel with the VPN server 200 is created, the communication device 100 may transmit the state data of the battery through the created tunnel. In another example, the communication device 100 may not be able to transmit data to the VPN server 200, when failing in tunnel creation. In another example, the communication device 100 may not be able to transmit data to the VPN server 200, before the tunnel with the VPN server 200 is created or when the tunnel is not created.

In an embodiment, operation S310 may be performed before or simultaneously with operation S320. That is, operation S310 may be performed by being included in operation S320.

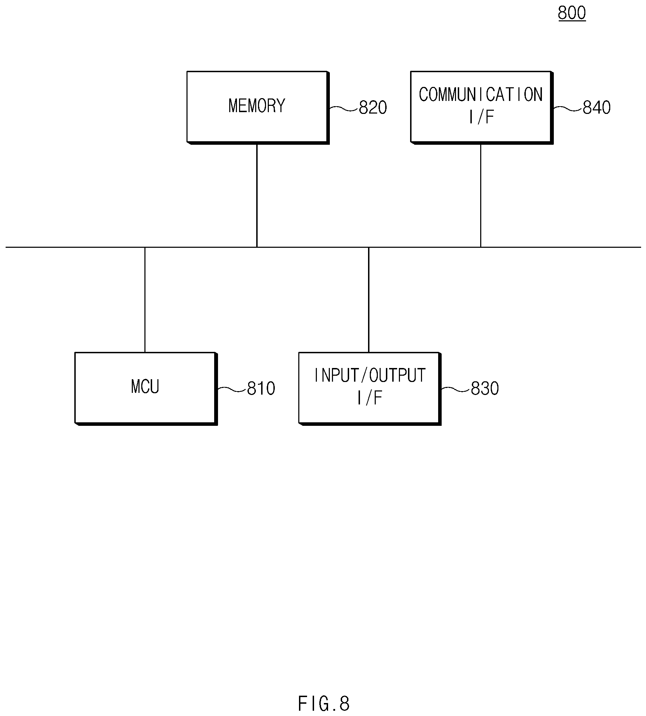

FIG. 8 is a block diagram showing a hardware configuration of a computing system for performing a battery data management method, according to an embodiment disclosed herein.

Referring to FIG. 8, a computing system 800 according to an embodiment disclosed herein may include an MCU 810, a memory 820, an input/output interface (I/F) 830, and a communication I/F 840.

The MCU 810 may be a processor that executes various programs (e.g., a battery cell voltage measurement program, a switching control program, etc.) stored in the memory 820, processes various data including ESS site information, battery state information, sensing information, diagnosis values, etc., through these programs, and executes the above-described functions of the battery data management system 1000 shown in FIG. 1.

The memory 820 may store various programs regarding voltage measurement, switching control, etc., of the battery cell. The memory 820 may also store various data such as ESS site information, state information, sensing information, diagnosis values, an analysis result, etc., of the battery.

The memory 820 may be provided in plural, depending on a need. The memory 820 may be volatile memory or non-volatile memory. For the memory 820 as the volatile memory, random access memory (RAM), dynamic RAM (DRAM), static RAM (SRAM), etc., may be used. For the memory 820 as the nonvolatile memory, read only memory (ROM), programmable ROM (PROM), electrically alterable ROM (EAROM), erasable PROM (EPROM), electrically erasable PROM (EEPROM), flash memory, etc., may be used. The above-listed examples of the memory 820 are merely examples and are not limited thereto.

The input/output I/F 830 may provide an interface for transmitting and receiving data by connecting an input device (not shown) such as a keyboard, a mouse, a touch panel, etc., and an output device such as a display (not shown), etc., to the MCU 810.

The communication I/F 840, which is a component capable of transmitting and receiving various data to and from a server, may be various devices capable of supporting wired or wireless communication. For example, a program for battery state data collection and big data analysis or various data may be transmitted and received to and from a separately provided external server through the communication I/F 840.

As such, a computer program according to an embodiment disclosed herein may be recorded in the memory 820 and processed by the MCU 810, thus being implemented as a module that performs functions shown in FIG. 1.

The above description is merely illustrative of the technical idea of the present disclosure, and various modifications and variations will be possible without departing from the essential characteristics of embodiments of the present disclosure by those of ordinary skill in the art to which the embodiments disclosed herein pertains.

Therefore, the embodiments disclosed herein are intended for description rather than limitation of the technical spirit of the embodiments disclosed herein and the scope of the technical spirit of the present disclosure is not limited by these embodiments disclosed herein. The protection scope of the technical spirit disclosed herein should be interpreted by the following claims, and all technical spirits within the same range should be understood to be included in the range of the present disclosure.

## Claims

1. A battery data management system comprising:
a communication device configured to obtain state data of a battery from a battery management system and transmit the state data of the battery to an outside;
a virtual private network (VPN) server configured to receive the state data of the battery from the communication device through a first network and transmit the state data of the battery to the outside through a second network;
a cloud server configured to receive the state data of the battery from the VPN server through the second network and transmit the state data of the battery to the outside through a third network; and
a management server configured to manage the state data of the battery, received from the cloud server through the third network.

2. The battery data management system of claim 1, wherein the communication device comprises a VPN client for creating an encrypted tunnel with the VPN server.

3. The battery data management system of claim 2, wherein the VPN server is configured to receive the state data of the battery through the encrypted tunnel created by the VPN client and transmit the state data of the battery to the cloud server.

4. The battery data management system of claim 1, wherein the first network and the third network comprise a private network, and the second network comprises a public network.

5. The battery data management system of claim 4, wherein the first network comprises a virtual private network.

6. The battery data management system of claim 1, wherein the communication device is further configured to select, as first data, data about diagnosis information indicating a failure of the battery out of the state data of the battery, received from the battery management system, and transmit the first data to the outside in a preset first period.

7. The battery data management system of claim 6, wherein the first data comprises a diagnosis value calculated in the battery management system to diagnose the failure of the battery.

8. The battery data management system of claim 1, wherein the communication device is further configured to transmit second data, which is state data of the battery collected for a specific time from the battery management system, to the outside in a preset second period.

9. The battery data management system of claim 8, wherein the management server comprises a big data server configured to store the state data of the battery, and the big data server is further configured to store the second data.

10. The battery data management system of claim 1, wherein the management server comprises a web server configured to display state information of the battery to a user.

11. The battery data management system of claim 1, wherein the management server comprises an ETL server configured to extract the state data of the battery and transform the state data into an analyzable form.

12. The battery data management system of claim 1, wherein the communication device is provided in plural.

13. A battery data management method comprising:
obtaining, by a communication device, state data of a battery from a battery management system and transmit the state data of the battery to an outside;
receiving, by a virtual private network (VPN) server, the state data of the battery from the communication device through a first network and transmitting the state data of the battery to the outside through a second network;
receiving, by a cloud server, the state data of the battery from the VPN server through the second network and transmitting the state data of the battery to the outside through a third network; and
managing, by a management server, the state data of the battery, received from the cloud server through the third network.

14. The battery data management method of claim 13, further comprising:
selecting, by the communication device, as first data, data about diagnosis information indicating a failure of the battery out of the state data of the battery, received from the battery management system; and
transmitting, by the communication device, the first data to the outside in a preset first period.

15. The battery data management method of claim 13, further comprising transmitting, by the communication device, second data, which is state data of the battery collected for a specific time from the battery management system, to the outside in a preset second period.

16. The battery data management method of claim 13, further comprising creating, by the communication device, an encrypted tunnel with the VPN server.
